# EUROPÄISCHE PATENTSCHRIFT

(11) **EP 2 096 090 B1**
(45) Veröffentlichungstag und Bekanntmachung des Hinweises auf die Patenterteilung: **01.05.2013**
(21) Anmeldenummer: 08171600.3
(22) Anmeldetag: 15.12.2008
(51) Int. Cl.: C04B 35/101, C04B 35/63, C04B 35/66, C04B 26/32, C08G 77/18, C08G 77/38, C08G 77/50

(54) **Verwendung von reaktiven, flüssigen Keramikbindemitteln**
Use of reactive liquid ceramics bonding agent
Utilisation d'une liant céramique liquide et réactif

(30) Priorität: 13.02.2008 DE 102008000287
(43) Veröffentlichungstag der Anmeldung: 02.09.2009
(73) Patentinhaber: Evonik Goldschmidt GmbH, 45127 Essen (DE)
(72) Erfinder: von Rymon Lipinski, Dr. Tadeusz, 53125 Bonn (DE); Herrwerth, Dr. Sascha, 45134 Essen (DE); Ebbrecht, Dr. Thomas, 58300 Wetter / Ruhr (DE); Koenig, Frank, 45884 Gelsenkirchen (DE); Ferenz, Dr. Michael, 45147 Essen (DE)

(56) Entgegenhaltungen:
- EP-A- 1 690 884
- EP-A- 1 820 832
- DE-A1-102006 020 967
- CRESPY A ET AL: "SYNTHESIS OF MACROMOLECULAR COUPLING AGENTS AND BINDERS" JOURNAL OF APPLIED POLYMER SCIENCE, JOHN WILEY AND SONS INC. NEW YORK, US, Bd. 44, Nr. 12, 25. April 1992 (1992-04-25), Seiten 2061-2067, XP000273611 ISSN: 0021-8995

## Beschreibung

Der Gegenstand der vorliegenden Erfindung betrifft die Verwendung eines reaktiven, flüssigen Bindemittels, geeignet für die Bindung von Keramikpartikeln zur Herstellung von keramischen Erzeugnissen, insbesondere feuerfesten, keramischen Erzeugnissen, aus Keramikpulver. Der Gegenstand der Erfindung betrifft ferner ein Verfahren zur Herstellung vorgenannter keramischer Erzeugnisse unter Verwendung des Bindemittels, sowie keramische Erzeugnisse als solche, wobei feuerfeste, keramische Erzeugnisse erfindungsgemäß besonders bevorzugt sind.

Feuerfeste Keramikerzeugnisse, nachstehend auch als "FF-Werkstoffe" bezeichnet, werden zum Schutz vor hohen Temperaturen in zahlreichen Industrieanlagen eingesetzt. Die wichtigsten feuerfesten Werkstofftypen sind:
- Geformte dichte Erzeugnisse, mit einer Porosität ≤ 45 Vol.%, wie Steine und Bauteile,
- Geformte wärmedämmende Erzeugnisse, mit einer Porosität ≥ 45 Vol.%, wie Feuerleichtsteine,
- Ungeformte feuerfeste Erzeugnisse, wie Feuerbetone, Rammmassen, Spritzmassen, Stampfmassen und dergleichen.

Herkömmliche feuerfeste Erzeugnisse werden aus pulverigen Rohstoffen hergestellt. Die Korngröße der Pulver liegt dabei in einem relativ breiten Bereich, zwischen einigen Mikrometern bis mehreren Millimetern. Vereinzelt werden auch Rohstoffe mit einer Partikelgröße > 10 mm verwendet.

Entsprechend werden die Pulver als grobkörnige, mittelkörnige, feinkörnige, und feinstkörnige Kornfraktion bezeichnet.

Aus dem Stand der Technik ist der Einsatz von festen, verzweigten oder vernetzten, hochmolekularen organomodifizierten Siloxanen oder festen Phenylmethylpolysiloxanen in keramischen Erzeugnissen bekannt.

Die WO 93/01146 betrifft ein Bindemittel für thermoplastische Formmassen, enthaltend mindestens ein thermoplastisches Siliconharz, mit einer Erweichungstemperatur zwischen 30° C und 200° C, für die Herstellung von Formteilen aus Keramik oder Metall aus entsprechenden Keramik- oder Metallpulvern. Solche thermoplastischen Formmassen finden u.a. Anwendung bei Verfahren wie Spritzgießen, Extrudieren oder Warmpressen, bei denen ein temperaturabhängiges Fließverhalten notwendig ist. Die angegebenen Siliconharze werden erfindungsgemäß bevorzugt ohne Katalysatoren eingesetzt, so dass eine weitere Vernetzung und Härtung während des Formgebungsprozesses unterbleibt.

Die Verwendung dieser vorstehend genannten festen Siloxanverbindungen als Keramikbindemittel, hat den Nachteil, dass sich sehr homogene Mischungen mit keramischen Matrialien nicht oder nur unzureichend herstellen lassen. Außerdem wird bei Verwendung solcher Bindemittel keine ausreichend hohe Grünfestigkeit des geformten Keramikerzeugnisses aus Keramikpartikeln ohne eine Temperaturbehandlung bei höheren Temperaturen, erhalten. Ein weiterer Nachteil der im Stand der Technik bekannten Bindemittel ist, dass man sehr hohe Brenntemperaturen, üblicherweise von oberhalb 1.000°C benötigt, um feuerfeste Keramikerzeugnisse mit ausreichenden mechanischen Eigenschaften wie Kaltdruckfestigkeit zu erreichen. Darüber hinaus benötigt man hohe Drücke und lange Brennzeiten, was mit einem hohen Energieaufwand verbunden ist.

Ferner betrifft die WO 93/01146 ein Bindemittel für thermoplastische Formmassen, wobei die Formmassen ausschließlich oberhalb der Erweichungstemperatur des Siliconharzes plastisch verarbeitet werden und unter Druck in Formen, deren Temperatur unterhalb der Erweichungstemperatur des Siliconharzes liegt, eingebracht werden. Geformte, keramische Erzeugnisse mit einer ausreichenden Grünfestigkeit lassen sich gemäß der Lehre der WO 93/01146 bei einer nicht plastischen Verarbeitung, beispielsweise uniaxial, isostatisch, mit Schlickerguss, durch Stampfen, Spritzen, insbesondere bei Temperaturen unterhalb der Erweichungstemperatur des Siliconharzes oder dergleichen, nicht herstellen. Außerdem lassen sich mit dem in der WO 93/01146 beschriebenen Bindemittel und Verfahren ungeformte keramische Erzeugnisse, insbesondere feuerfeste Werkstoffe, nicht herstellen.

DE 10 2006 020 967 beschreibt reaktive, flüssige Keramikbindemittel, welche zur Herstellung von keramischen Erzeugnissen geeignet sind, wobei das reaktive, flüssige Keramikbindemittel organomodifizierte Siloxanverbindungen aufweist, wobei die organomodifizierten Siloxanverbindungen Organoalkoxysiloxaneinheiten gemäß der folgenden allgemeinen Formel enthalten: 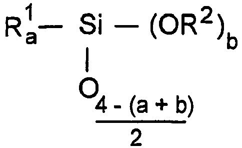 dabei ist
- R¹: Alkylrest und/oder Arylrest,
- R²: H und/oder Alkylrest mit 1 bis 4 Kohlenstoffatomen,
- a: größer oder gleich 0 und kleiner oder gleich 2 und
- b: größer 0 und kleiner oder gleich 3,
mit der Maßgabe, dass a + b größer oder gleich 1 und kleiner oder gleich 4 ist.

Die hier beschriebenen Verbindungen lassen sind auf verschiedene Art und Weise herstellen. Mögliche Syntheserouten sind beispielsweise in DE 33 12 911, EP 0 124 748 und in Noll, Chemie und Technologie der Silicone (1968), Verlag Chemie, beschrieben. Die Verwendung von großtechnischen verfügbaren Rohstoffen führt jedoch in der Regel zu Produkten, bei denen die sich die Organoalkoxysiloxaneinheiten in der Regel an den Kettenenden des Siloxanbackbones befinden. Auch die Herstellung von Verbindungen bei denen mehrere Alkoxy-Funktionen an einer Siloxaneinheiten gebunden sind, ist aufwendig. Zur Optimierung der Produkteigenschaften kann es aber von Vorteil sein Produkte mit bestimmter Siloxan-Topologien herzustellen.

Überraschenderweise wurde nunmehr gefunden, dass sich Keramikerzeugnisse, insbesondere feuerfeste Keramikerzeugnisse, bereits bei niedrigen Behandlungstemperaturen zur Verfügung stellen lassen, die eine unerwartet hohe Kaltdruckfestigkeit aufweisen, indem reaktive, flüssige Keramikbindemittel verwendet werden, wobei das reaktive, flüssige Keramikbindemittel organomodifizierte Siloxanverbindungen aufweist, wobei die organomodifizierten Siloxanverbindungen Organoalkoxysiloxaneinheiten gemäß der allgemeinen Formel (I) 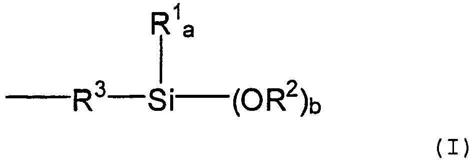 aufweisen, worin
- R¹: unabhängig voneinander gleiche oder verschiedene Alkyl-, Alkaryl- oder Arylrest, die gegebenenfalls durch Etherfunktionen unterbrochen sind, bevorzugt Methyl oder Phenyl, insbesondere Methyl,
- R²: unabhängig voneinander gleiche oder verschiedene Reste aus der Gruppe H und/oder Alkylrest mit 1 bis 6 Kohlenstoffatomen, bevorzugt Methyl oder Ethyl,
- R³: unabhängig voneinander gleiche oder verschiedene zweibindige, gegebenenfalls ungesättigte Kohlenwasserstoffreste, mit 1 bis 30 Kohlenstoffatomen, der gegebenenfalls durch Etherfunktionen unterbrochen ist, bevorzugt - (CH₂)ₙ- mit n = 1 bis 11 insbesondere -CH₂-CH₂-,
- a: größer oder gleich 0 und kleiner oder gleich 2,5 und
- b: größer 0 und kleiner oder gleich 3, mit der Maßgabe, dass a + b größer oder gleich 1 und kleiner oder gleich 3 ist.

Derartige organomodifizierte Siloxanverbindungen sind in der EP 1 820 832 beschrieben und lassen sich zum Beispiel durch die Hydrosilylierung von alkoxyfunktionellen Vinylsilanen mit SiH-funktionellen Siloxanen herstellen. Auf diese Art und Weise ist es möglich unterschiedlichste Siloxantopologien auf eine einfache Art und Weise zu realisieren, da verschiedenste SiH-funktionelle Siloxane zugänglich sind. Zudem können in einfacher Art und Weise durch Cohydrosilylierung weitere organische Reste an das Siloxangerüst gebunden werden, zum Beispiel um das Produkt gezielt zu hydrophobieren oder hydrophilieren.

Bei der Formel (I) handelt es sich um eine durchschnittliche Formel der Organoalkoxysiloxaneinheiten der flüssigen, organomodifizierten Siloxanverbindung.

Der Anteil H für R² kann größer oder gleich 0 % und kleiner oder gleich 10 %, bevorzugt größer oder gleich 0 % und kleiner oder gleich 5 %, besonders bevorzugt größer oder gleich 0 % und kleiner oder gleich 1 %, und insbesondere bevorzugt 0 % sein.
R² = H beschreibt SiOH-Funktionen und deren molaren Anteil bezogen auf die gesamte Stoffmenge SiOR²-Gruppen, die in diesem Strukturelement vorkommt.

Der Begriff "keramisches Erzeugnis" bzw. "Keramikerzeugnis" umfasst unter anderem keramische Massen, formstabile Keramikkörper sowie feuerfeste keramische Erzeugnisse.

Bevorzugt weist das reaktive, flüssige Keramikbindemittel wenigstens eine flüssige organomodifizierte Siloxanverbindung auf, wobei die flüssige, organomodifizierte Siloxanverbindung Organoalkoxysiloxaneinheiten gemäß der allgemeinen Formel (I) aufweist.

Bei der erfindungsgemäßen Verwendung der Siloxane können den flüssigen Keramikbindemitteln auch weitere flüssige, organomodifizierte Siloxanverbindungen zugesetzt werden, die Organoalkoxysiloxaneinheiten tragen und nicht durch Formel (I) beschrieben werden.

Der Begriff "flüssig", wie in der vorliegenden Erfindung gebraucht, hat die Bedeutung, dass die entsprechende Substanz, insbesondere die flüssige, organomodifizierte Siloxanverbindung oder das entsprechende Gemisch bei Raumtemperatur, d.h. 25° C, flüssig ist.

Vorzugsweise kann vorgesehen sein, dass die Substituenten R¹ und/oder R² und/oder R³ der flüssigen, organomodifizierten Siloxanverbindung/en, wie nachstehend definiert sind, worin
- R¹: Phenyl und/oder C₁-C₁₆-Alkylrest sind, vorzugsweise ist R¹ = C₁-C₁₂-Alkylrest, weiter bevorzugt ist R¹ = C₁-C₈-Alkylrest, besonders bevorzugt ist R¹ = C₁-C₄-Alkylrest, wobei am meisten bevorzugt ist R¹ = Methyl und/oder Ethyl; und/oder
- R²: H, Methyl, Ethyl, Propyl, Iso-Propyl, Butyl, tert-Butyl, wobei Methyl und/oder Ethyl am meisten bevorzugt sind.
- R³: -(CH₂)ₙ- mit n = 1 bis 11, bevorzugt mit n = 1 bis 3, besonders bevorzugt n = 2.

Es kann weiterhin erfindungsgemäß bevorzugt sein, dass a = 0 bis 2,5 ist, vorzugsweise ist a = 0 bis 1 und weiter bevorzugt ist a = 0 bis 0,5, mit der Maßgabe, dass a + b ≤ 3 ist und vorzugsweise a + b = 3 ist.

Es kann weiterhin erfindungsgemäß bevorzugt sein, dass b = 0,1 bis 3 ist, vorzugsweise ist b = 0,5 bis 3, noch weiter bevorzugt ist b = 2 bis 3 und besonders bevorzugt ist b = 3, mit der Maßgabe, dass a + b ≤ 3 und vorzugsweise a + b = 3 ist.

Die reaktiven, flüssigen organomodifizierten Siloxanverbindungen können ein Molekulargewicht von 500 bis 20.000, vorzugsweise 750 bis 15.000, bevorzugt 1.000 bis 10.000, noch bevorzugt 1.200 bis 8.000 und besonders bevorzugt 1.200 bis 7.000 aufweisen.

Ferner kann das reaktive, flüssige Keramikbindemittel ein Lösungsmittel enthalten, ausgewählt aus der Gruppe, umfassend organische Lösungsmittel, vorzugsweise flüssige Kohlenwasserstoffe, insbesondere mit einem Siedepunkt zwischen 40° C bis 100 °C, wie beispielsweise Alkohol und/oder Aceton und deren Mischungen. Durch den Zusatz von Lösemitteln lässt sich beispielsweise die Mischbarkeit mit Keramikpulver verbessern.

Es kann bevorzugt sein, dass das reaktive, flüssige Keramikbindemittel, insbesondere ein Keramikbindemittel enthaltend flüssige, organomodifizierte Siloxanverbindungen, in einer Mischung mit Wasser, besonders bevorzugt als eine wässrige Emulsion, eingesetzt wird. Durch die Verwendung einer wässrigen Emulsion in Kombination mit dem Keramikpulver lässt sich beispielsweise eine bereits bei Raumtemperatur vergussfähige oder spritzfähige Masse herstellen.

Zur Verbesserung der Eigenschaften beispielsweise in Bezug auf Verarbeitbarkeit, Handhabung, Trocknungsvorgang, Brennvorgang, Festigkeit, Korrosionsbeständigkeit und/oder Oxidationsbeständigkeit, der keramischen Masse und/oder Keramikerzeugnisses, kann dem Keramikbindemittel mindestens ein Additiv zugesetzt sein, wobei dieses Additiv unterschiedlich zu der organomodifizierten Siloxanverbindung(en) auf Basis der Formel (I) ist und ausgewählt ist aus der Gruppe umfassend ein anorganisches Bindemittel, ein anorganisches Salz der Schwefelsäure, ein anorganisches Salz der Salzsäure, ein anorganisches Salz der Phosphorsäure, Magnesiumchlorid, Magnesiumsulfat, Monoaluminiumphosphat, Alkaliphosphat, Alkalisilikat, Wasserglas, ein organisches Bindemittel, Zellulosederivat, Polyvinylalkohol, Wasser, organische Lösungsmittel, Formentrennmittel, Stabilisatoren, organische Pigmente, anorganische Pigmente, nichtoxidische Stoffe, vorzugsweise Kohlenstoff, Metallpulver, Metallfasern, Keramikfasern, Glasfasern, Naturfasern, Kunststofffasern, Metalloxide, Boride, Carbide, Nitride, Oxynitride, Oxycarbide, Silicide, Polymere, Katalysator und/oder Carbonfasern. Bevorzugt kann der Zusatz von sehr reaktiven nanoskaligen, oxidischen und/oder nichtoxidischen Pulvern und besonders bevorzugt kann der Zusatz von nanoskaligen Metalloxiden, Nano-Aluminiumoxid und/oder von seinen Precursoren sein.

Weitere Additive, die erfindungsgemäß besonders zur Verbesserung der Verarbeitkeit, Handhabung, Gründichte und -festigkeit usw., verwendbar sind, umfassen Abbindeverzögerer, Abbindebeschleuniger, Presshilfsmittel, Gleitmittel, Stellmittel, Entschäumer, Verflüssiger, Sintermittel und dergleichen.

Besonders bevorzugt ist die Verwendung von flüssigen, organomodifizierten Siloxanverbindungen bei der erfindungsgemäßen Verwendung des Bindemittels in Kombination mit weiteren Additiven, wie organische und/oder anorganische Bindemittel, Wasser, organische Lösungsmittel, funktionelle Zusatzstoffe wie Kohlenstoff, Boride, Metallpulver, Carbide, Silizide, Oxide und dergleichen.

Ebenfalls kann die Verwendung von Keramikbindemittel in Kombination mit hydraulischen Bindemitteln, wie hydratisierbares Aluminiumoxid (sog. Rho-Aluminiumoxid), Calciumaluminat-Zement, Portlandzement, Gips gegebenenfalls mit Wasser in variablen Mengen, vorteilhaft sein.

Dem Keramikbindemittel kann bevorzugt nanoskalige Metalloxide, bevorzugt nanoskaliges Aluminiumoxid, zugesetzt sein, was zu einer verbesserten Kaltdruckfestigkeit von Keramikerzeugnissen führen kann.

Es wurde ferner überraschend gefunden, dass die erfindungsgemäße Verwendung des, reaktiven, flüssigen Keramikbindemittels, in Verbindung mit einem Keramikpulver bereits bei niedrigen Brenntemperaturen zu stabilen, insbesondere feuerfesten, Keramikerzeugnissen führt.

Feuerfeste keramische Erzeugnisse, werden allgemein und in der Beschreibung der vorliegenden Erfindung auch als feuerfeste keramische Werkstoffe oder FF-Werkstoffe bezeichnet.

Ein weiterer Vorteil der vorliegenden Erfindung ist es, dass keramische Erzeugnisse mit einer ausreichenden Grünfestigkeit, durch die erfindungsgemäße Verwendung des reaktiven, flüssigen Keramikbindemittels bei Temperaturen < 30° C, vorzugsweise bei Raumtemperatur, hergestellt werden können.

Vorteilhaft ist, dass sich durch die erfindungsgemäße Verwendung des Keramikbindemittels die Brenntemperatur und/oder die Brennzeit und damit der Energiebedarf bei der Herstellung von Keramikerzeugnissen, insbesondere feuerfesten Erzeugnissen, senken lassen. Außerdem lässt sich bei Verwendung fossiler Energieträger, bedingt durch den geringeren Energiebedarf, der CO₂- und NOₓ-Ausstoß reduzieren.

Es wurde auch beobachtet, dass sich die Brennzeiten, zumindest in den meisten Fällen, verkürzen lassen, ohne dass es hinsichtlich der Materialeigenschaften insbesondere der Festigkeit der unter der erfindungsgemäßen Verwendung der Keramikbindemittel hergestellten Keramikerzeugnisse im Vergleich zu konventionellen d.h. nach dem Stand der Technik hergestellten feuerfesten Keramikerzeugnisse nachteilig wäre.

Ferner wurde in vorteilhafter Weise beobachtet, dass es bei erfindungsgemäßer Verwendung des reaktiven, flüssigen Keramikbindemittels im Temperaturbereich zwischen beispielsweise 100° C und 1.000° C, vorzugsweise 200° C und 800° C, zu keinem oder allenfalls nur einem geringen Abfall der Werkstofffestigkeit, d.h. Kaltdruckfestigkeit [MPa], kommt.

Die erfindungsgemäße Verwendung des, reaktiven, flüssigen Keramikbindemittels kann zu keiner bzw. keiner signifikanten Bildung niedrig schmelzender Phasen in der Keramik während des Herstellungsverfahrens führen. Dies ist vorteilhaft, da das Auftreten solcher Phasen sehr nachteilig für die Werkstoffeigenschaften, insbesondere im Hinblick auf deren Stabilität bei hohen Temperaturen ist.

Noch ein Vorteil der erfindungsgemäßen Verwendung des reaktiven, flüssigen Keramikbindemittels ist es, dass es mit oder ohne Wasserzusatz dem Keramikerzeugnis eine hohe Formfestigkeit verleiht und deshalb auch für Hydratation anfällige Keramikerzeugnisse, beispielsweise basische FF-Werkstoffe, bevorzugt verwendbar ist.

Keramikerzeugnisse schließen im Sinne dieser Erfindung auch getrocknete, getemperte und/oder gebrannte Keramikerzeugnisse ein. Der Begriff Keramikerzeugnis, wie in der vorliegenden Beschreibung gebraucht, umfasst auch sogenannte Grünkörper. Insbesondere umfasst der Begriff Keramikerzeugnis hitzebeständige und/oder feuerfeste Keramikerzeugnisse (FF-Werkstoffe). Des Weiteren werden unter einem Keramikerzeugnis auch Erzeugnisse, wie Formkörper und Werkstoffe, verstanden, bei denen es sich um einen sogenannten Verbundwerkstoff handelt, d.h. die aus einem keramischen Werkstoff und mindestens einem anderem Werkstoff bzw. einer anderen Phase aufgebaut sind. Diese können auch als wenigstens eine keramische Schicht, vorzugsweise eine keramische Oberflächenbeschichtung vorliegen.

Mittels der erfindungsgemäßen Verwendung des reaktiven, flüssigen Keramikbindemittels lassen sich geformte und ungeformte keramische Erzeugnisse, insbesondere hitzebeständige und /oder feuerfeste, ungebrannte und/oder gebrannte keramische Formkörper, ungeformte feuerfeste Erzeugnisse, beispielsweise Betone, Stampfmassen, Gießmassen, Beschichtungen oder Überzüge mit ausgezeichneten physikalischen und mechanischen Eigenschaften und verbesserten Herstellungsparametern erhalten.
Unter Herstellungsparametern sind erfindungsgemäß insbesondere die Parameter zur Herstellung der ungeformten Erzeugnisse, der ungebrannten Erzeugnisse, der Grünkörper, sowie der gebrannten Keramikerzeugnisse zu verstehen.

Bei der erfindungsgemäßen Verwendung kann das reaktive, flüssige Keramikbindemittel dem Keramikpulver, bezogen auf das Gesamtgewicht des Keramikpulvers, mit einem Gewichtsanteil von 0,01 bis 70 Gew.-%, vorzugsweise von 0,1 bis 50 Gew.-% und bevorzugt von 0,5 bis 30 Gew.-% zugesetzt werden.

Es hat sich in überraschender Weise gezeigt, dass das reaktive, flüssige Keramikbindemittel bereits in deutlich geringeren Mengen, bezogen auf das keramische Pulver, wirksam ist, als die aus dem Stand der Technik bekannten Verbindungen. Deutliche Effekte können bereits mit Mengen der organomodifizierten Siloxanverbindungen von weniger als 5 Gew.-%, bezogen auf das Gesamtgewicht des Keramikpulvers, erzielt werden. Erfindungsgemäß bevorzugt sind Mengen der organomodifizierten Siloxanverbindungen im Bereich von 0,05 bis < 10 Gew.-%, insbesondere 0,1 bis 5 Gew.-%, besonders bevorzugt 0,5 bis 3 Gew.-%, jeweils bezogen auf die Menge an keramischem Pulver.

Wenn die Menge der hinzu gegebenen organomodifizierten Siloxanverbindungen unter 0,01 Gew.-% liegt, ist es sehr schwierig, ein gebranntes Erzeugnis mit hoher Festigkeit zu erhalten, während bei einer Zugabe von mehr als 10 Gew.-%, insbesondere mehr als 15 Gew.-% der organomodifizierten Siloxanverbindungen, ein Anschwellen des gebrannten Erzeugnisses beobachtet werden kann, wodurch seine Festigkeit und Gefügedichte beeinträchtigt werden kann. Erfindungsgemäß lässt sich das reaktive, flüssige Keramikbindemittel zur Herstellung von keramischen Erzeugnissen, insbesondere von geformten und ungeformten, gebrannten und ungebrannten feuerfesten, keramischen Erzeugnissen, aus Keramikpulver/n verwenden.

Ein weiterer Gegenstand der vorliegenden Erfindung betrifft eine keramische Masse, die unter erfindungsgemäßer Verwendung des Keramikbindemittels und Keramikpulver hergestellt wird.

Die Keramikmassen können direkt verwendet werden oder zuerst zu Pulvern oder Granulaten verarbeitet werden.

In überraschender Weise wurde außerdem gefunden, dass sich Keramikmassen enthaltend die flüssigen organomodifizierten Siloxanverbindungen, bereits bei Temperaturen unterhalb der Erweichungstemperatur von festen, organomodifizierten Siloxanverbindungen, verarbeiten lassen.

Erfindungsgemäß kann es daher bevorzugt sein, Keramik, enthaltend Keramikpulver und Keramikbindemittel lediglich unter Druck zu verarbeiten.

Die erfindungsgemäßen Keramikmassen können zur Herstellung von geformten und ungeformten Keramikerzeugnissen, sowie zur Herstellung von gebrannten als auch ungebrannten Keramikerzeugnissen verwendet werden.

Bevorzugt für die Herstellung der Keramikmassen verwendbare Keramikpulver können ausgewählt sein aus der Gruppe umfassend grobkörnige, mittelkörnige, feinkörnige und/oder feinstkörnige keramische Partikel. Geeignete Keramikpartikel können alle typischen, oxidischen, nichtoxidischen, saueren, oder basischen Keramikrohstoffe sowie Mischungen davon umfassen. Besonders bevorzugt sind Keramikerzeugnisse auf Al₂O₃-Basis. Auch Mischungen dieser Rohstoffe können vorliegen.

Besonders geeignet verwendbare keramische Pulver, insbesondere Mischungen keramischer Pulver sowie deren Rohstoffe umfassen:
Oxide, wie BeO, MgO, Al₂O₃, SiO₂, CaO, TiO₂, Cr₂O₃, MnO, Fe₂O₃, ZnO, SrO, Y₂O₃, BaO, CeO₂, UO₂; und/oder
Carbide, wie Be₂C, Be₄C, Al₄C₃, SiC, TiC, Cr₃C₂, Mn₃C, Fe₃C, SrC₂, YC₂, ZrC, NbC, Mo₂C, BaC₂, CeC₂, HfC, TaC, WC, UC; und/oder
Nitride, wie Be₃N₂, BN, Mg₃N₂, AlN, Si₃N₄, Ca₃N₂, TiN, VN, CrN, Mn₃N₂, Sr₃N₂, ZrN, NbN, Mo₃N₂, HfN, TaN, WN₂, UN; und/oder
Boride, wie AlB₄, CaB₆, TiB₂, VB₂, CrB₂, MnB, FeB, CoB, NiB, SrB₆, YB₆, ZrB₂, NbB₂, MoB₂, BaB₆, LaB₆, CoB₆, HfB₂, TaB₂, WB, T UB₄; und/oder
Silicide, wie CaSi, Ti₅Si₃, V₅Si₃, CrSi₂, FeSi, CoSi, ZrSi₂, NbSi₂, MoSi₂, TaSi₂, WSi₂; und/oder Mischungen der vorgenannten keramischen Stoffe.

Weitere keramische Partikel die eingesetzt werden können, umfassen oxidische und nichtoxidische Verbindungen, Mischphasen usw., beispielsweise, Mullit (Al₆Si₂O₁₃), Mischkristalle aus dem System Al₂O₃-Cr₂O₃, MgSiO₄ CaSiO_{4,} ZrSiO_{4,} MgAl₂O₄, CaZrO₃, SIALON, ALON, und/oder B₄C-TiB₂.

Außerdem können keramische Partikel mit nicht stöchiometrischer Zusammensetzung, wie Ti0x-Silicate, Gläser und keramische Materialien mit einer Metallphase erfindungsgemäß verwendet werden.

Erfindungsgemäß verwendbare Keramikpartikel können auch calcinierte Tonerden, reaktive Tonerden, feinstgemahlene, feuerfeste Rohstoffe, wie Microsilica, Feuerfestton und/oder Bindeton umfassen.

Unter grobkörnig sind im Sinne der vorliegenden Erfindung vorzugsweise Körnungen ≥ 1 mm, besonders bevorzugt 1 mm bis 10 mm zu verstehen. Als Mittelkorn werden im Sinne der vorliegenden Erfindung Körnungen von ≥ 0,1 mm bis ≤ 1 mm, bevorzugt 0,2 mm bis 0,5 mm, verstanden.

Unter feinkörnig sind im Sinne der vorliegenden Erfindung vorzugsweise Körnungen von 0,02 mm bis ≤ 0,2 mm, besonders bevorzugt 0,02 mm bis 0,1 mm zu verstehen. Diese Kornfraktion wird üblicherweise im technischen Sprachgebrauch auch als Mehl bezeichnet.

Als Feinstkorn sind, insbesondere reaktive feuerfeste Komponenten, mit einer mittleren Korngröße ≤ 15 µm, bevorzugt ≤ 5 µm, zu verstehen.

Zur Erzielung guter Festigkeitseigenschaften der erfindungsgemäßen keramischen Erzeugnisse, kann die Verwendung von Keramikmassen enthaltend Keramikbindemittel in Kombination mit sogenannten funktionellen Zusatzstoffen, wie oxidische und/oder nichtoxidische Mikropulver, Nanopulver, Metallpulver, Metall-, Keramik-, Glas-, Kunststoff-Fasern und/oder -geweben, vorteilhaft sein.

Besonders bevorzugt ist, wenn die Keramikmasse nanoskalige Metalloxide, bevorzugt nanoskaliges Aluminiumoxid, aufweist.

Es hat sich für einige Verfahrensschritte und/oder Anwendungszwecke als vorteilhaft erwiesen, Korngrößen unterhalb von 1 µm zumindest teilweise zu verwenden oder mitzuverwenden, das heißt, nanoskalige keramische Pulver dem keramischen Pulvergemisch zuzusetzen.

Die grobkörnigeren Komponenten können in Mengen von ≤ 100 Gew.-%, vorzugsweise in Mengen ≤ 90 Gew.-%, besonders bevorzugt in Mengen von 15 Gew.-% bis 80 Gew.-%, bezogen auf das Gesamtgewicht der Keramikmasse, in der Keramikmasse vorliegen.

Die mittelkörnigen Komponenten können in Mengen von ≤ 100 Gew.-%, vorzugsweise in Mengen ≤ 40 Gew.-%, besonders bevorzugt in Mengen von 3 Gew.-% bis 20 Gew.-%, bezogen auf das Gesamtgewicht der Keramikmasse, in der Keramikmasse vorliegen.

Die feinkörnigen Komponenten können in Mengen von ≤ 100 Gew.-%, vorzugsweise in Mengen ≤ 95 Gew.-%, besonders bevorzugt in Mengen von 5 Gew.-% bis 80 Gew.-%, bezogen auf das Gesamtgewicht der Keramikmasse, in der Keramikmasse vorliegen.

Die feinstkörnigen Komponenten können in Mengen von ≤ 100 Gew.-%, vorzugsweise in Mengen von ≤ 50 Gew.-%, besonders bevorzugt in Mengen von 0,1 Gew.-% bis 35 Gew.-%, bezogen auf das Gesamtgewicht der Keramikmasse, in der Keramikmasse vorliegen.

Der Begriff "Gesamtgewicht der Keramikmasse", wie vorstehend gebraucht betrifft die Keramikmasse ohne Bindemittel.

Weiterhin bevorzugt ist, dass die Keramikmasse rieselfähig ist. Die Keramikmasse kann ein Schüttgewicht von 500 g/l bis 2.000 g/l, vorzugsweise von 600 g/l bis 1.800 g/l, weiter bevorzugt von 700 g/l bis 1.600 g/l, bevorzugt von 800 g/l bis 1.500 g/l und besonders bevorzugt von 850 g/l bis 1.200 g/l aufweisen.

Weiterhin können der Keramikmasse Additive, Zusatzstoffe und/oder Bindemittel, ausgewählt aus der Gruppe umfassend organische Bindemittel, anorganische Bindemittel, Wasser und dergleichen zugesetzt werden.

Die erfindungsgemäße Keramikmasse kann in Form einer Spritzgussformmasse, Stampfmasse, Rammmasse, Gießmasse, Anstrichmasse oder Überzugsmasse vorliegen.

Das keramische Pulver kann Korngrößen im Nanobereich aufweisen und kann vorzugsweise aus Oxiden, Carbiden, Nitriden, Boriden und/oder Siliciden, vorzugsweise Oxiden des Aluminiums bestehen.

Die erhaltene Keramikmasse kann direkt für das erfindungsgemäße Verfahren eingesetzt werden, sie kann aber auch an Luft, unter Vakuum oder in einer Atmosphäre aus Inertgas, Kohlenmonoxid. Kohlendioxid, Stickstoff und/oder Kohlenwasserstoffen calciniert und die calcinierte Formmasse pulverisiert und als keramisches, vorzugsweise nanoskaliges, Pulver verwendet werden.

Besonders bevorzugt sind Keramikmassen, die keramische Pulver enthalten, wie Magnesiumsilicate, Aluminiumsilicate, Spinelle, Siliciumdioxid, Magnesiumoxid, Calciumoxid, Chromoxid, Aluminiumoxid, Zirkonoxid, Zinkoxid, Zirkonsilicat, Siliciumcarbid, SIALON. ALON, Siliciumnitrid und/oder Mischungen davon.

Die Keramikmassen können zusätzlich Katalysatoren, übliche Zusatzstoffe, Bindemittel und/oder Additive aufweisen. Die Keramikmassen können insbesondere auch geringe Mengen an Formentrennmittel, Stabilisatoren und/oder Pigmenten enthalten.

Ferner kann die Verwendung von Keramikmassen enthaltend Keramikbindemittel in Kombination mit hydraulischen Bindemitteln, wie Tonerdezement, Portlandzement, gegebenenfalls mit Wasser in variablen Mengen, kann ebenfalls vorteilhaft sein.

Ein weiterer Gegenstand der vorliegenden Erfindung betrifft ein Verfahren zur Herstellung von Keramikerzeugnissen, insbesondere von keramischen FF-Werkstoffen.

Das erfindungsgemäße Verfahren zur Herstellung von geformten Keramikerzeugnissen lässt sich ganz allgemein in zwei Ausführungsformen einteilen.

Bei der ersten Ausführungsform kann die Formmasse, bei der es sich um eine Mischung aus dem keramischen Pulver und dem erfindungsgemäßen Bindemittel handelt, zuerst unter einem Druck von > 1 MPa, vorzugsweise zwischen ≥ 100 MPa und ≤ 200 MPa, gepresst werden, um einen Formkörperrohling bzw. Grünkörper mit einer definierten äußeren Form herzustellen. Das Pressen kann mittels herkömmlicher Technologien erfolgen, beispielsweise uniaxial, isostatisch oder dergleichen. Der erhaltene Keramikkörper kann ohne eine weitere Temperaturbehandlung der Verwendung zugeführt bzw. einem anschließenden Brand unterzogen werden, wobei ein Keramikerzeugnis, vorzugsweise ein feuerfestes Keramikerzeugnis erhalten wird.

Gemäß der zweiten Ausführungsform wird die Mischung aus dem keramischen Pulver und dem erfindungsgemäßen reaktiven, flüssigen Bindemittel, gleichzeitig geformt und erhitzt und/oder gebrannt (sogenanntes Heißpreßverfahren). Hierbei wird die Mischung unter einem Druck von > 1 MPa, vorzugsweise 5 MPa bis 100 MPa, bei einer höheren Temperatur als die Raumtemperatur, vorzugsweise > 50°C gepresst. Das Pressen kann mittels herkömmlicher Technologien erfolgen, beispielsweise uniaxial, isostatisch oder dergleichen. Der erhaltene Keramikkörper kann ohne eine weitere Temperaturbehandlung der Verwendung zugeführt bzw. einem anschließenden Brand unterzogen werden, wobei ein Keramikerzeugnis, vorzugsweise ein feuerfestes Keramikerzeugnis erhalten wird.

Ein geeignetes Verfahren zur Herstellung von geformten keramischen Erzeugnissen, insbesondere geformten feuerfesten keramischen Erzeugnissen, umfasst die nachstehenden Schritte:
a) Mischen von reaktiven, flüssigen Keramikbindemittel, mit Keramikpulver zwecks Erzeugung einer Formmasse,
b) Verfestigung der Formmasse erhalten aus Schritt a) mittels Druckbehandlung und/oder Temperaturbehand - lung, wobei ein formstabiles keramisches Erzeugnis erhalten wird.

Ein weiteres Verfahren zur Herstellung von ungeformten keramischen Erzeugnissen, insbesondere feuerfesten keramischen Erzeugnissen, umfasst die nachstehenden Schritte:
a) Mischen von Keramikbindemittel mit Keramikpulver;
b) ggf. Zusatz von Additiven, Hilfs- und/oder Zusatzstoffen und/oder anderen Bindemitteln;
c) Erzeugung einer keramischen Masse, wie Betonmasse, Gießmasse, Stampfmasse oder Rammmasse.

Das reaktive, flüssige Keramikbindemittel, insbesondere die flüssige organomodifizierte Siloxanverbindung, kann, bezogen auf das Gesamtgewicht des Keramikpulvers, in der Formmasse oder keramischen Masse mit einem Gewichtsanteil von 0,01 Gew.-% bis 70 Gew.-%, vorzugsweise von 0,1 bis 50 Gew.-% und bevorzugt von 0,5 bis 30 Gew.-% enthalten sein.

Um keramische Verbundmaterialien herzustellen, kann man die aus Schritt a) des Verfahrens erhaltene Mischung auf einen formstabilen Träger aufbringen. Anschließend kann man dann die Keramikmasse trocknen und/oder tempern und/oder brennen. Die Temperaturbeständigkeit und/oder Größe des Trägermaterials ist u.a. entscheidend ob das Verbundmaterial nur getrocknet oder weiteren Temperaturbehandlungsschritten wie Tempern und/oder Brennen ausgesetzt wird.

Dem Keramikpulver kann, wie bereits vorstehend beschrieben, ein Additiv, Zusatzstoff und/oder Bindemittel mit einem Gewichtsanteil von 0,01 bis 50 Gew.-%, vorzugsweise von 0,05 bis 30 Gew.-% und bevorzugt von 0,1 bis 20 Gew.-% bezogen auf das Gesamtgewicht des Keramikpulvers, zugesetzt sein.

Vorzugsweise kann der aus Schritt b) erhaltene Grünkörper verfestigt werden, in dem
- der Grünkörper bei einer Temperatur von ≥ 25°C bis < 200° C getrocknet; und/oder
- bei einer Temperatur von > 200°C bis < 1.000°C getempert und/oder
- bei einer Temperatur von ≥ 1.000° C gebrannt wird.

Bei der Herstellung von feuerfesten Erzeugnissen kann es außerdem wichtig sein, dass das verwendete Keramikbindemittel, enthaltend flüssige, organomodifizierte Siloxanverbindungen, während der Temperaturbehandlung mit anderen Bestandteilen der Keramikmasse, vorzugsweise der feuerfesten Keramikmasse, unter Bildung refraktärer Verbindungen reagiert.

In Feuerfest (FF)-Keramikmassen, die mit dem zugesetzten flüssigen, organomodifizierten Siloxanverbindungen keine oder nur unzureichende Festigkeiten bilden, kann eine ausreichende Bindungskraft durch Zusatz eines aktiven Keramikpulvers erreicht werden. Besonders geeignet ist dabei Aluminiumoxid. Geeignet sind auch Al-haltige Stoffe, die nach einem Umwandlungsprozess, z.B. Oxidation, ein reaktives Aluminiumoxid bilden.

Die für die Bindung verantwortliche Reaktion zwischen keramischem Pulver und der organomodifizierten Siloxanverbindung des reaktiven, flüssigen Keramikbindemittels kann bereits bei Raumtemperatur stattfinden. Mit steigender Temperatur verfestigt sich die Bindung. Bereits nach einer Temperaturbehandlung in mittlerem Temperaturbereich, von 400°C bis 1.000°C oder teilweise sogar von 200°C bis 600 °C können die Keramikerzeugnisse, insbesondere keramische FF-Werkstoffe, hohe Festigkeiten erreichen, wodurch ein Hochtemperaturbrand von > 1.000°C nicht notwendig ist.

Die Festigkeit des getrockneten und/oder getemperten und/oder gebrannten Formkörpers kann außerdem noch weiter erhöht werden, indem man ihn mindestens einmal mit:
- organomodifizierten Siloxanverbindungen des reaktiven, flüssigen Keramikbindemittels, insbesondere mit flüssigen, organomodifizierten Siloxanverbindungen und/oder
- einer flüssigen, polymeren Organosiliciumverbindung und/oder
- mit einer Lösung einer festen, polymeren Organosiliciumverbindung in einem Lösungsmittel und/oder
- mit einer Schmelze einer festen, polymeren Organosiliciumverbindung;

bei Raumtemperatur und/oder unter Erhitzen imprägniert und an Luft, unter Vakuum und/oder in einer Atmosphäre aus Inertgas, Wasserstoff, Kohlenmonoxid, Kohlendioxid. Stickstoff und/oder Kohlenwasserstoffen auf eine Temperatur von ≥ 200° C erhitzt, nachdem der Imprägnierungsgrad, falls erforderlich, durch Druckerhöhung gesteigert wurde.

Der Zusatz von einem Lösungsmittel zum Keramikbindemittel zur Herabsetzung der Viskosität kann den Imprägnierungsvorgang begünstigen.

Unter einem Formkörperrohling ist ein verwendungsfähiger Grünkörper zu verstehen, der eine ausreichend hohe Anfangsfestigkeit hat, um in weiteren Prozessschritten gehandhabt oder maschinell bearbeitet werden zu können.

Zusätzlich können Grünkörper vor der Sinterung gehärtet werden, um so noch festere Grünkörper zu erhalten. Die Aushärtung kann erfolgen durch:
- Auslagerung in einer feuchten Atmosphäre und/oder
- Erhitzen auf eine Temperatur ≥ 30°C und/oder
- Zusatz von an sich bekannten geeigneten Kondensationskatalysatoren, wie Dibutylzinndilaurat oder Tetrabutyltitanat.

Durch die erfindungsgemäße Verwendung der Keramikbindemittel, insbesondere Keramikbindemittel, wobei das reaktive, flüssige Keramikbindemittel flüssige, organomodifizierte Siloxanverbindungen aufweist, lässt sich eine ausreichend hohe Grünfestigkeit erreichen. Die hohe Formstabilität bzw. Kalt-Druck-Festigkeit erlaubt, dass die Grünkörper vor dem letztendlichen Temperungs- und/oder Brennvorgang weiter bearbeitet oder geformt werden können, ohne dass es durch die mechanische Beanspruchung zu einer Zerstörung der Grünkörper führt.

Die Grünkörper können durch übliche im Stand der Technik bekannte Verfahren geformt werden. Die geformten Grünkörper können, wenn es gewünscht ist, weiter durch maschinelle Bearbeitung verformt werden.

Der Brennvorgang der Formkörper bzw. der Keramikerzeugnisse kann so lange fortgesetzt werden, bis kein Gewichtsverlust mehr zu beobachten ist. Die Dauer des Brennvorgangs kann in Abhängigkeit von der Temperatur, der Zusammensetzung der Formmasse und der Menge der verwendeten Siloxane in der Formmasse variiert werden.

Gewichtskonstanz ist üblicherweise nach 1 bis 24 Stunden bei Temperaturen > 400°C erreicht.

Überraschenderweise wurde nun gefunden, dass bei der erfindungsgemäßen Verwendung der Keramikbindemittel, wobei das reaktive, flüssige Keramikbindemittel vorzugsweise flüssige, organomodifizierte Siloxanverbindungen aufweist und den erfindungsgemäßen Formmassen enthaltend das reaktive, flüssige Keramikbindemittel:
- in verhältnismäßig kürzerer Zeit bei gleichen Brenntemperaturen; und/oder
- bei verhältnismäßig niedrigen Brenntemperaturen in vergleichbaren Zeiten
ein Brand von bruchfreien keramischen Erzeugnissen mit hervorragenden physikalischen und mechanischen Eigenschaften erzielt werden kann.

Die Herstellung von geformten keramischen Erzeugnissen, wie Feuerfeststeine, kann die folgenden Schritte umfassen:
- Herstellung einer homogenen keramischen Masse, insbesondere Formmasse, aus feuerfesten keramischen Partikeln und Keramikbindemittel;
- gegebenenfalls Zusatz eines reaktiven Aluminiumoxids bzw. eines Al-haltigen Stoffes;
- gegebenenfalls Zusatz vom Wasser bzw. einem anderen Bindemittel und Homogenisierung der keramischen Mischung bzw. Formmasse;
- gegebenenfalls Zusatz von Additiven und weitere Homogenisierung der Mischung bzw. Formmasse;
- gegebenenfalls werden der Mischung Zusatzstoffe beigemischt, die in den fertigen Steinen bestimmte Funktionen übernehmen. Geeignete Zusatzstoffe sind beispielsweise Metallpulver, welche die Oxidationsbeständigkeit eines nichtoxidischen Keramikerzeugnisses, insbesondere eines keramischen FF-Werkstoffes, verbessern;
- Verpressen der homogenen feuerfesten Formmasse zu definierten Steinformaten. Bevorzugt werden Pressdrücke ≥ 100 MPa und ≤ 200 MPa;
- Trocknen und/oder Tempern der gepressten Steine bei Temperaturen > 50° C; und/oder Brennen der getrockneten und/oder getemperten Steine bei Temperaturen ≥ 400° C.

Die Herstellung der ungeformten erfindungsgemäßen Feuerfest-Erzeugnisse kann bei dem Feuerfest-Hersteller bzw. vor Ort bei dem Feuerfest-Anwender, vorzugsweise in folgenden Schritten durchgeführt werden:
- Herstellung einer homogenen Keramikmasse;
- gegebenenfalls Zusatz eines aktiven Aluminiumoxids bzw. eines Al-haltigen Stoffes;
- gegebenenfalls Zusatz eines Binders, Additive und/oder Wasser und Homogenisierung des Gemenges;
- gegebenenfalls Zusatz von Zusatzstoffen und weitere Homogenisierung des Gemenges.

Nach Bedarf werden dieser Mischung Zusatzstoffe beigemischt, die in den fertigen Formmassen bestimmte Funktionen übernehmen. Beispiele für Zusatzstoffe sind Metallpulver und nichtoxidische Werkstoffe wie Kohlenstoff, Carbide, Nitride, Silicide, Metallfaser, Kunststofffaser, Carbonfaser, welche die Oxidationsbeständigkeit, Festigkeit, Trocknungsverhalten, Korrosionsbeständigkeit und/oder die Temperaturwechselbeständigkeit des Keramikerzeugnisses weiter verbessern.

Keramikmassen, insbesondere homogene Keramikmassen, können mittels in der Feuerfesttechnologie geläufigen Techniken, wie Pressen, Gießen, Vibrieren, Spritzen, Torkretieren, Stampfen und dergleichen zu einem keramischen Erzeugnis, umfassend FF-Werkstoffe, monolithische Feuerfestauskleidungen etc. verarbeitet werden.

Aus den erfindungsgemäßen Formmassen, wie Feuerfest-Formmassen, können auch Fertigbauteile hergestellt werden. Dazu werden die wie oben beschrieben hergestellten Formmassen in eine Metall-, bzw. Holz-, bzw. Kunststoffform gebracht. Durch anschließendes Vibrieren, Stampfen, Pressen usw. kann die Masse zusätzlich verdichtet werden. Nach Aushärten der Masse wird das Bauteil ausgeformt und bei 30° C bis 200° C getrocknet und/oder getempert. Nach Bedarf kann das getrocknete bzw. getemperte Bauteil gebrannt werden. Die Brennbedingungen hängen im Wesentlichen von der chemischen und mineralogischen Zusammensetzung der Feuerfest-Masse sowie der Form und Geometrie des Bauteils ab. In der Regel ist ein Brand bei Temperaturen ≤ 1.600° C ausreichend. Nach dem Trocknen, Tempern und/oder Brand können die erfindungsgemäßen keramischen Fertigbauteile, insbesondere FF-Werkstoffe, einsatzbereit sein.

Das Ausmaß der Härtung ist von der Form des keramischen Erzeugnisses abhängig. Auf jeden Fall wird der keramische Formkörper so weit ausgehärtet, bis er die zur Vermeidung einer Formveränderung während des Brennvorgangs erforderliche Festigkeit besitzt.

Die erfindungsgemäßen geformten und ungeformten keramischen Erzeugnisse, wie Feuerfestwerkstoffe, können in den Öfen und Anlagen der Nichteisen-Industrie, Stahlindustrie, Zementindustrie, Glasindustrie, Müllverbrennungsanlagen usw. eingesetzt werden.

Obwohl die organomodifizierten Siloxane des Keramikbindemittels vorzugsweise als Bindemittel für keramische Massen geeignet sind, ist ihre Verwendung nicht hierauf beschränkt. Sie können auch in Gieß- und Pressmassen, in Anstrichmassen für Elektroisolierungen und in Schutzüberzugsmassen für Metalloberflächen verwendet werden.

Noch ein Gegenstand der vorliegenden Erfindung betrifft das keramische Erzeugnis, insbesondere formstabile keramische Erzeugnis, selbst.

Es wurde erfindungsgemäß gefunden, dass man mittels Verwendung des Bindemittels aus keramischem Pulver bei Raumtemperatur oder Temperaturen von < 30° C und Einwirkzeiten von mehreren Stunden oder Tagen, keramische Erzeugnisse, insbesondere keramische Massen, herstellen kann, die formstabil sein können. Solche keramischen Erzeugnisse, insbesondere keramischen Massen, können bereits eine gute Kaltdruckfestigkeit aufweisen.

Besonders bevorzugte keramische Erzeugnisse sind feuerfeste keramische Erzeugnisse.

Das keramische Erzeugnis kann geformt oder ungeformt sein.

Erfindungsgemäß, unter einem Pressdruck von 100 MPa, hergestellte formstabile keramische Erzeugnisse können eine Kaltdruckfestigkeit nach einer Temperaturbehandlung von 2 Stunden bei 100° C bis ≤ 1.000° C, bevorzugt ≤ 700° C, von ≥ 15 MPa aufweisen.

Weitere Gegenstände der vorliegenden Erfindung werden durch die Ansprüche beschrieben.

Die erfindungsgemäße Verwendung der reaktiven Keramikbindemittel wird nachfolgend beispielhaft beschrieben, ohne dass die Erfindung auf diese beispielhaften Ausführungsformen beschränkt sein soll.

Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können.

### Ausführungsbeispiele:

In den nachfolgend aufgeführten Beispielen wird die vorliegende Erfindung beispielhaft beschrieben, ohne dass die Erfindung, deren Anwendungsbreite sich aus der gesamten Beschreibung und den Ansprüchen ergibt, auf die in den Beispielen genannten Ausführungsformen beschränkt gelesen werden kann.

Die Herstellung und die Eigenschaften der erfindungsgemäßen Erzeugnisse sind nachstehend anhand von Beispielen erläutert.

### Darstellung von Siloxanverbindungen:

### Verbindung A:

381 g eines SiH-Funktionelles Siloxans der allgemeinen Formel Me₃SiO-(SiMe₂O)₁₃-(SiMeHO)₅-SiMe₃ wurden in einem 1L-Dreihalskolben vorgelegt, auf 120° C erhitzt und mit 10 ppm eines Platin-Katalysators versetzt. Anschließend wurden 327 g Triethoxyvinylsilan langsam zudosiert. Es wurde noch 1 h bei 125° C gerührt und anschließend das überschüssige Olefin bei 130° C im Ölpumpenvakuum destillativ entfernt.

### Verbindung B:

433 g eines SiH-Funktionelles Siloxans der allgemeinen Formel Me₃SiO-(SiMe₂O)₁₃-(SiMeHO)₅-SiMe₃ wurden in einem 1L-Dreihalskolben vorgelegt, auf 120° C erhitzt und mit 10 ppm eines Platin-Katalysators versetzt. Anschließend wurden 289 g Trimethoxyvinylsilan langsam zudosiert. Es wurde noch 1 h bei 125° C gerührt und anschließend das überschüssige Olefin bei 130° C im Ölpumpenvakuum destillativ entfernt.

### Verbindung C:

146 g Triethoxyvinylsilan und 48 g 4-Vinyl-1-cyclohexene-1,2-epoxid wurden in einem 500 mL-Dreihalskolben vorgelegt, auf 120° C erhitzt und mit 10 ppm eines Platin-Katalysators versetzt. Anschließend wurden 231 g eines SiH-Funktionelles Siloxans der allgemeinen Formel Me₃SiO-(SiMe₂O)₂₈-(SiMeHO)₁₅-SiMe₃ langsam zudosiert. Es wurde noch 2 h bei dieser Temperatur gerührt und anschließend das überschüssige Olefin bei 130° C im Ölpumpenvakuum destillativ entfernt.

### Verbindung D:

674 g eines SiH-Funktionelles Siloxans der allgemeinen Formel Me₃SiO-(SiMe₂O)₈₉-(SiMeHO)₉-SiMe₃ wurden in einem 1L-Dreihalskolben vorgelegt, auf 120° C erhitzt und mit 10 ppm eines Platin-Katalysators versetzt. Anschließend wurden 160 g Trimethoxyvinylsilan langsam zudosiert. Es wurde noch 1 h bei 125° C gerührt und anschließend das überschüssige Olefin bei 130° C im Ölpumpenvakuum destillativ entfernt.

### Verbindung E:

382 g eines SiH-Funktionelles Siloxans der allgemeinen Formel (HMe₂SiO_{1/2})₃(SiMe₂O_{2/2})₁₂₀(SiMeHO_{2/2})₂₄(SiPhO_{3/2}) wurden in einem 1L-Dreihalskolben vorgelegt, auf 120° C erhitzt und mit 10 ppm eines Platin-Katalysators versetzt. Anschließend wurden 223 g Trimethoxyvinylsilan langsam zudosiert. Es wurde noch 1 h bei 125° C gerührt und anschließend das überschüssige Olefin bei 130° C im Ölpumpenvakuum destillativ entfernt.

### Verbindung F:

181 g eines SiH-Funktionelles Siloxans der allgemeinen Formel (HMe₂SiO_{1/2})₂(SiMe₂O_{2/2})₁₃(SiMeHO_{2/2})₆ wurden in einem 500 mL-Dreihalskolben vorgelegt, auf 120° C erhitzt und mit 10 ppm eines Platin-Katalysators versetzt. Anschließend wurden 247 g Trimethoxyvinylsilan langsam zudosiert. Es wurde noch 3 h bei 125° C gerührt und anschließend das überschüssige Olefin bei 130° C im Ölpumpenvakuum destillativ entfernt.

### Verbindung G:

148 g Triethoxyvinylsilan und 41 g Styrol wurden in einem 500 mL-Dreihalskolben vorgelegt, auf 120° C erhitzt und mit 10 ppm eines Platin-Katalysators versetzt. Anschließend wurden 233 g eines SiH-Funktionelles Siloxans der allgemeinen Formel Me₃SiO-(SiMe₂O)₂₈-(SiMeHO)₁₅-SiMe₃ langsam zudosiert. Es wurde 3 h bei einer Temperatur von 125° C gerührt, noch einmal 10 g Styrol und 35 g Triethoxyvinylsilan nachdosiert und weitere 1,5 h bei 125° C gerührt. Anschließend wurde das überschüssige Olefin bei 130° C im Ölpumpenvakuum destillativ entfernt.

### Verbindung H (nicht erfindungsgemäß):

Eine weitere flüssige, organomodifizierte Siloxanverbindung wurde gemäß DE 10 2006 020 967 hergestellt.

Für diese gilt die mittlere Formel (II)

R¹ₐSi O_{(4-a-b)/2} (OR²)_{b} (II)

a = 1,0
b = 0,4
R¹ = Methyl, R² = Ethyl,

### Beispiel 1:

### Bindekraft in Korundsteinen

Ein hochreiner Sinterkorund, T60 erhältlich bei der Firma ALMATIS GmbH in Ludwigshafen, mit folgendem Kornaufbau:

| | | |
|---|---|---|
| Grobkorn | 1 bis 2 mm | 50 Gew.-% |
| Mittelkorn | 0,2 bis 0,5 mm | 10 Gew.-% |
| Mehl | < 0,1 mm | 40 Gew.-% |

wurde mit 4. Gew.-Anteilen der Verbindung A homogen gemischt. Zum Vergleich wurde eine Formmasse mit 4 Gew.-Anteilen von Sulfitlauge (ohne Verbindung A) hergestellt, sowie mit 4 Gew.-Anteilen der nicht erfindungsgemäßen Verbindung H. Aus den Mischungen wurden Prüfkörper unter einem Pressdruck von 100 MPa hergestellt und anschließend bei 600, und 1.500° C, 2 h gebrannt. Nach dem Brand besaßen die Prüfkörper folgende Kennwerte:

| | Kaltdruckfestigkeit /MPa (nach DIN EN 993-1) | Kaltdruckfestigkeit /MPa (nach DIN EN 993-1) |
|---|---|---|
| | 600° C | 1.500° C |
| Ohne Verbindung A | < 5 | < 25 |
| Mit Verbindung A | > 15 | > 110 |
| Mit Verbindung H (nicht erfindungsgemäß) | > 40 | < 100 |

Es zeigt sich, dass der Zusatz von Verbindung A eine deutliche Steigerung der Festigkeit der Keramik bewirkt. Im Vergleich zu Verbindung H ergibt sich vor allem bei hohen Brenntemperaturen ein deutlicher Vorteil.

### Beispiel 2:

### Bindekraft unterschiedlicher Verbindungen

Ein hochreiner Sinterkorund, T60 erhältlich bei der Firma ALMATIS GmbH in Ludwigshafen, mit folgendem Kornaufbau:

| | | |
|---|---|---|
| Grobkorn | 1 bis 2 mm | 50 Gew.-% |
| Mittelkorn | 0,2 bis 0,5 mm | 10 Gew.-% |
| Mehl | < 0,1 mm | 40 Gew.-% |

wurde mit jeweils 4. Gew.-Anteilen der Verbindung A, B und C homogen gemischt. Aus den Mischungen wurden Prüfkörper unter einem Pressdruck von 100 MPa hergestellt und anschließend bei 600° C, 2 h gebrannt. Nach dem Brand besaßen die Prüfkörper folgende Kennwerte:

| Verbindung | Kaltdruckfestigkeit (MPa) (nach DIN EN 993-1) |
|---|---|
| A | > 15 |
| B | > 20 |
| C | > 15 |
| D | > 20 |
| E | > 20 |
| F | > 25 |
| G | > 20 |

Der Zusatz von Verbindungen A bis G bewirkt eine hohe Steigerung der Festigkeit der Korundsteine.

## Patentansprüche

1. Verwendung von reaktiven Keramikbindemitteln in flüssiger Form zur Herstellung von keramischen Erzeugnissen aus Keramikpulver, **dadurch gekennzeichnet, dass** das reaktive, flüssige Keramikbindemittel flüssige organomodifizierte Siloxanverbindungen aufweist, wobei die organomodifizierten Siloxanverbindungen Organoalkoxysiloxaneinheiten gemäß der allgemeinen Formel (I) 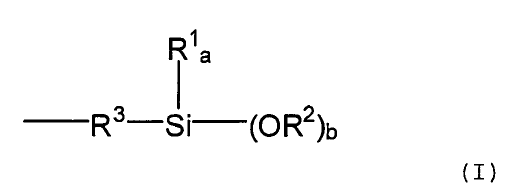 aufweisen, worin
R¹ unabhängig voneinander gleiche oder verschiedene Alkyl-, Alkaryl- oder Arylreste, die gegebenenfalls durch Etherfunktionen unterbrochen sind,
R² unabhängig voneinander gleiche oder verschiedene Reste aus der Gruppe H und/oder Alkylrest mit 1 bis 6 Kohlenstoffatomen,
R³ unabhängig voneinander gleiche oder verschiedene zweibindige, gegebenenfalls ungesättigte Kohlenwasserstoffreste, mit 1 bis 30 Kohlenstoffatomen, der gegebenenfalls durch Etherfunktionen unterbrochen ist, und
a größer gleich 0 und kleiner gleich 2,5 und
b größer 0 und kleiner gleich 3,
mit der Maßgabe, dass a + b größer gleich 1 und kleiner gleich 3 ist.

2. Verwendung nach Anspruch 1, wobei der Anteil H für R² der organomodifizierten Siloxanverbindung ≥ 0 % und ≤ 10 %, bevorzugt ≥ 0 % und ≤ 5 %, besonders bevorzugt ≥ 0 % und ≤ 1 %, ausmacht.

3. Verwendung nach Anspruch 1 oder 2, worin
R¹ Phenyl- und/oder ein C₁-C₁₆-Alkylrest ist, vorzugsweise ist R¹ ein C₁-C₁₂-Alkylrest, weiter bevorzugt ist R¹ ein C₁-C₈-Alkylrest, besonders bevorzugt ist R¹ ein C₁-C₄-Alkylrest, wobei am meisten bevorzugt ist R¹ ein Methyl und/oder Ethyl; und/oder
R² H, Methyl, Ethyl, Propyl, Iso-Propyl, Butyl, tert.-Butyl.
R³ -(CH₂)ₙ- mit n = 1 bis 11.

4. Verwendung nach einem der vorherigen Ansprüche 1 bis 3, wobei a 0 bis 2 ist, mit der Maßgabe, dass a + b kleiner gleich 3 ist.

5. Verwendung nach einem der vorherigen Ansprüche 1 bis 4, wobei b 0,1 bis 3 ist, mit der Maßgabe, dass a + b kleiner gleich 3 ist.

6. Verwendung nach einem der vorherigen Ansprüche 1 bis 5, worin das reaktive, flüssige Keramikbindemittel ein Lösungsmittel enthält, ausgewählt aus der Gruppe, umfassend, organische Lösungsmittel.

7. Verwendung nach einem der vorherigen Ansprüche 1 bis 6, worin das reaktive, flüssige Keramikbindemittel als Lösungsmittel Alkohol oder Aceton oder eine Mischung davon enthält.

8. Verwendung nach einem der vorherigen Ansprüche 1 bis 7, wobei das reaktive, flüssige Keramikbindemittel Wasser enthält und vorzugsweise in Form einer wässrigen Emulsion vorliegt.

9. Verwendung nach einem der Ansprüche 1 bis 8, worin die organomodifizierten Siloxanverbindungen, ein Molekulargewicht von 500 bis 20.000 aufweisen.

10. Verwendungnach einem der Ansprüche 1 bis 9, worin dem Keramikbindemittel mindestens ein Additiv zugesetzt ist, wobei dieses Additiv unterschiedlich zu der flüssigen organomodifizierten Siloxanverbindung auf Basis der Formel (I) ist, ausgewählt aus der Gruppe umfassend ein anorganisches Bindemittel, ein anorganisches Salz der Schwefelsäure, ein anorganisches Salz der Salzsäure, ein anorganisches Salz der Phosphorsäure, Magnesiumchlorid, Magnesiumsulfat, Monoaluminiumphosphat, Alkaliphosphat, Alkalisilikat, Wasserglas, ein organisches Bindemittel, Zellulosederivat, Polyvinylalkohol, Wasser, organische Lösungsmittel, Formentrennmittel, Stabilisatoren, organische Pigmente, anorganische Pigmente, Oxide, Metalloxide, nichtoxidische Stoffe, vorzugsweise Kohlenstoff, Metallpulver, Metallfasern, Keramikfasern, Glasfasern, Naturfasern, Kunststofffasern, Carbide, Nitride, Silicide Polymere, Verflüssiger, Abbindeverzögerer, Abbindebeschleuniger, Presshilfsmittel, Gleitmittel, Stellmittel, Entschäumer, Sintermittel, Katalysatoren und/oder
Carbonfasern, wobei das Keramikbindemittel bevorzugt nanoskalige Metalloxide, bevorzugt nanoskaliges Aluminiumoxid, aufweist.

11. Verwendung von Keramikbindemittel nach einem der Ansprüche 1 bis 10 zur Herstellung von formstabilen keramischen Erzeugnissen, insbesondere formstabilen, feuerfesten, keramischen Erzeugnissen, aus Keramikpulvern.

12. Verwendung von Keramikbindemittel nach einem der vorherigen Ansprüche zur Herstellung von gepressten und/oder temperaturbehandelten, formstabilen keramischen Erzeugnissen.

13. Verwendung von Keramikbindemittel nach einem der vorherigen Ansprüche zur Herstellung von ungeformten keramischen Erzeugnissen, insbesondere von ungeformten feuerfesten keramischen Erzeugnissen.

14. Verwendung von Keramikbindemittel nach einem der vorherigen Ansprüche, wobei die organomodifizierten Siloxanverbindungen des Keramikbindemittels dem Keramikpulver, bezogen auf das Gesamtgewicht des Keramikpulvers, mit einem Gewichtsanteil von 0,01 bis 70 Gew.-% zugesetzt wird.

15. Keramikmasse, worin die Keramikmasse Keramikbindemittel nach einem der Ansprüche 1 bis 10 und Keramikpulver aufweist.

16. Keramikmasse nach Anspruch 15, wobei die Keramikmasse nanoskalige Metalloxide, bevorzugt nanoskaliges Aluminiumoxid, aufweist.

17. Keramikmasse nach Anspruch 15 oder 16, wobei die Keramikmasse vorzugsweise ein Schüttgewicht von 500 g/l bis 2.000 g/l aufweist.

18. Keramikmasse nach einem der Ansprüche 15 bis 17, worin die Keramikmasse Zusatzstoffe aufweist, ausgewählt aus der Gruppe umfassend organische Bindemittel und/oder anorganische Bindemittel.

19. Keramikmasse nach einem der Ansprüche 15 bis 18, wobei die Keramikmasse eine Spritzgussformmasse, Stampfmasse, Betonmasse, Rammmasse, Gießmasse, Anstrichmasse oder Überzugsmasse ist.

20. Verfahren zur Herstellung von geformten formstabilen keramischen Erzeugnissen, insbesondere feuerfesten formstabilen keramischen Erzeugnissen, **dadurch gekennzeichnet, dass** das Verfahren die nachstehenden Schritte umfasst
a) mischen von Keramikbindemittel gemäß einem der Ansprüche 1 bis 10 mit Keramikpulver zwecks Erzeugung einer Formmasse,
b) Verfestigung der Formmasse erhalten aus Schritt a) mittels Druckbehandlung und/oder Temperaturbehandlung, wobei ein formstabiles keramisches Erzeugnis erhalten wird.

21. Verfahren nach Anspruch 20, gemäß dem das reaktive, flüssige Keramikbindemittel, bezogen auf das Gesamtgewicht des Keramikpulvers in der Formmasse mit einem Gewichtsanteil von 0,01 bis 70 Gew.-% enthalten ist.

22. Verfahren nach Anspruch 20 oder 21, wobei die aus Schritt a) erhaltene Mischung auf einen formstabilen Träger aufgebracht wird.

23. Verfahren nach einem der Ansprüche 20 bis 22, wobei dem Keramikpulver noch ein Additiv, Zusatzstoff und/oder Bindemittel zugesetzt wird, wobei dem Keramikpulver vorzugsweise nanoskalige Metalloxide und bevorzugt nanoskaliges Aluminiumoxid zugesetzt wird.

24. Verfahren nach einem der Ansprüche 20 bis 23, wobei die aus Schritt a) erhaltene Mischung verfestigt wird, in dem
- die Keramikmasse bei einer Temperatur von 50° C bis < 200° C getrocknet; und/oder
- bei einer Temperatur von ≥ 200° C bis < 1.000° C getempert; und/oder
- bei einer Temperatur von ≥ 1.000° C gebrannt wird.

25. Verfahren zur Herstellung von ungeformten keramischen Erzeugnissen, insbesondere feuerfesten keramischen Erzeugnissen, **dadurch gekennzeichnet, dass** das Verfahren die nachstehenden Schritte umfasst
a) Mischen von reaktivem, flüssigen Keramikbindemittel gemäß einem der Ansprüche 1 bis 10 mit Keramikpulver;
b) ggf. Zusatz von Additiven, Hilfs- und/oder Zusatzstoffen und/oder anderen Bindemitteln;
c) Erzeugung einer keramischen Masse, umfassend Betonmasse, Gießmasse, Stampfmasse oder Rammmasse.

26. Verfahren nach Anspruch 25, gemäß dem das reaktive, flüssige Keramikbindemittel, bezogen auf das Gesamtgewicht des Keramikpulvers in der Keramikmasse mit einem Gewichtsanteil von 0,01 bis 70 Gew.-% enthalten ist.

## Claims

1. Use of reactive ceramic binders in liquid form for producing ceramic products from ceramic powder, **characterized in that** the reactive, liquid ceramic binder comprises liquid organomodified siloxane compounds having organoalkoxysiloxane units of the general formula (I) 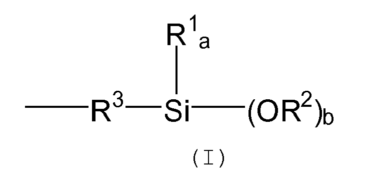 where
the radicals R¹ are, independently of one another, identical or different alkyl, alkaryl or aryl radicals which may be interrupted by ether functions,
the radicals R² are, independently of one another, identical or different radicals selected from the group consisting of H and/or alkyl radicals having from 1 to 6 carbon atoms,
the radicals R³ are, independently of one another, identical or different divalent, saturated or unsaturated hydrocarbon radicals which have from 1 to 30 carbon atoms and may be interrupted by ether functions and
a is greater than or equal to 0 and less than or equal to 2.5 and
b is greater than 0 and less than or equal to 3,
with the proviso that a + b is greater than or equal to 1 and less than or equal to 3.

2. Use according to Claim 1, wherein the proportion of H in R² of the organomodified siloxane compound is from ≥ 0% to ≤ 10%, preferably from ≥ 0% to ≤ 5%, particularly preferably from ≥ 0% to ≤ 1%.

3. Use according to Claim 1 or 2, wherein
the radicals R¹ being a phenyl and/or a C₁-C₁₆₋alkyl radical, with preference being given to R¹ being a C₁-C₁₂-alkyl radical, more preferably R¹ = C₁-C₈-alkyl radical, particularly preferably R¹ = C₁-C₄-alkyl radical, with greatest preference being given to R¹ being methyl and/or ethyl; and/or
the radicals R² are each H, methyl, ethyl, propyl, isopropyl, butyl, tert-butyl,
R³ is -(CH₂)ₙ- where n = 1 to 11.

4. Use according to any of Claims 1 to 3, wherein a is from 0 to 2, with the proviso that a + b is less than or equal to 3.

5. Use according to any of Claims 1 to 4, wherein b is from 0.1 to 3, with the proviso that a + b is less than or equal to 3.

6. Use according to any of Claims 1 to 5, wherein the reactive, liquid ceramic binder contains a solvent selected from the group consisting of organic solvents.

7. Use according to any of Claims 1 to 6, wherein the reactive, liquid ceramic binder contains alcohol or acetone or a mixture thereof as solvent.

8. Use according to any of Claims 1 to 7, wherein the reactive liquid ceramic binder contains water and is preferably in the form of an aqueous emulsion.

9. Use according to any of Claims 1 to 8, wherein the organomodified siloxane compounds have a molecular weight of from 500 to 20 000.

10. Use according to any of Claims 1 to 9, wherein at least one additive has been added to the ceramic binder, with this additive being different from the liquid organomodified siloxane compound(s) based on the formula (I) and being selected from the group consisting of an inorganic binder, an inorganic salt of sulphuric acid, an inorganic salt of hydrochloric acid, an inorganic salt of phosphoric acid, magnesium chloride, magnesium sulphate, monoaluminium phosphate, alkali metal phosphate, alkali metal silicate, water glass, an organic binder, cellulose derivative, polyvinyl alcohol, water, organic solvents, mould release agents, stabilizers, organic pigments, inorganic pigments, oxides, metal oxides, nonoxidic materials, preferably carbon, metal powders, metal fibres, ceramic fibres, glass fibres, natural fibres, synthetic fibres, carbides, nitrides, silicides, polymers, fluidizers, setting retarders, setting accelerators, pressing aids, lubricants, thickeners, antifoams, sinter aids, catalysts and/or carbon fibres, where the ceramic binder preferably comprises nanosize metal oxides, preferably nanosize aluminium oxide.

11. Use of ceramic binders according to any of Claims 1 to 10 for producing dimensionally stable ceramic products, in particular dimensionally stable, refractory, ceramic products, from ceramic powders.

12. The use of ceramic binders according to any of the preceding claims for producing pressed and/or heat-treated, dimensionally stable ceramic products.

13. Use of ceramic binders according to any of the preceding claims for producing unshaped ceramic products, in particular unshaped refractory ceramic products.

14. Use of ceramic binders according to any of the preceding claims, wherein the organomodified siloxane compounds of the ceramic binder are added to the ceramic powder in a proportion by weight of from 0.01 to 70% by weight, based on the total weight of the ceramic powder.

15. Ceramic composition comprising ceramic binders according to any of Claims 1 to 10 and ceramic powder.

16. Ceramic composition according to Claim 15 comprising nanosize metal oxides, preferably nanosize aluminium oxide.

17. Ceramic composition according to Claim 15 or 16, which preferably has a bulk density of from 500 g/l to 2000 g/l.

18. Ceramic composition according to any of Claims 15 to 17 which comprises further components selected from the group consisting of organic binders and inorganic binders.

19. Ceramic composition according to any of Claims 15 to 18 which is an injection-moulding composition, tamping composition, concrete composition, ramming composition, casting composition, paint or coating composition.

20. Process for producing shaped dimensionally stable ceramic products, in particular refractory dimensionally stable ceramic products, **characterized in that** the process comprises the following steps
a) mixing of ceramic binders according to any of Claims 1 to 10 with ceramic powder to produce a moulding composition,
b) strengthening of the moulding composition obtained from step a) by means of pressure treatment and/or thermal treatment, with a dimensionally stable ceramic product being obtained.

21. Process according to Claim 20, wherein the reactive, liquid ceramic binder is, based on the total weight of the ceramic powder, present in the moulding composition in a proportion by weight of from 0.01 to 70% by weight.

22. Process according to Claim 20 or 21, wherein the mixture obtained from step a) is applied to a dimensionally stable support.

23. Process according to any of Claims 20 to 22, wherein an additive, further component and/or binder is additionally added to the ceramic powder, with preference being given to adding nanosize metal oxides and preferably nanosize aluminium oxide to the ceramic powder.

24. Process according to any of Claims 20 to 23, wherein the mixture obtained from step a) is strengthened by
- drying the ceramic composition at a temperature of from 50°C to < 200°C; and/or
- heat-treating it at a temperature of from ≥ 200°C to < 1000°C and/or
- firing it at a temperature of ≥ 1000°C.

25. Process for producing unshaped ceramic products, in particular refractory ceramic products, **characterized in that** the process comprises the following steps
a) mixing of a reactive, liquid ceramic binder according to any of Claims 1 to 10 with ceramic powder;
b) if appropriate, addition of additives, auxiliaries and/or further components and/or other binders;
c) production of a ceramic composition such as a concrete composition, casting composition, tamping composition or ramming composition.

26. Process according to Claim 25, wherein the reactive, liquid ceramic binder is, based on the total weight of the ceramic powder, present in the ceramic composition in a proportion by weight of from 0.01 to 70% by weight.

## Revendications

1. Utilisation de liants réactifs pour céramiques sous forme liquide pour la fabrication d'articles céramiques à partir de poudres céramiques, **caractérisée en ce que** le liant liquide réactif pour céramiques comprend des composés de siloxane organo-modifiés liquides, les composés de siloxane organo-modifiés comprenant des unités organo-alcoxysiloxane selon la formule générale (I) 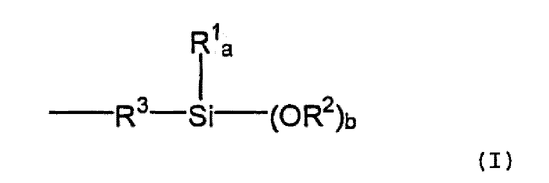 dans laquelle
les R¹ représentent indépendamment les uns des autres des radicaux alkyle, alkaryle ou aryle identiques ou différents, qui sont éventuellement interrompus par des fonctions éther,
les R² représentent indépendamment les uns des autres des radicaux identiques ou différents du groupe H et/ou radical alkyle contenant 1 à 6 atomes de carbone,
les R³ représentent indépendamment les uns des autres des radicaux hydrocarbonés bivalents, éventuellement insaturés, de 1 à 30 atomes de carbone, identiques ou différents, qui sont éventuellement interrompus par des fonctions éther, et
a est supérieur ou égal à 0 et inférieur ou égal à 2,5, et
b est supérieur à 0 et inférieur ou égal à 3,
à condition que a + b soit supérieur ou égal à 1 et inférieur ou égal à 3.

2. Utilisation selon la revendication 1, dans laquelle la proportion de H pour R² du composé de siloxane organo-modifié est ≥ 0 % et ≤ 10 %, de préférence ≥ 0 % et ≤ 5 %, de manière particulièrement préférée ≥ 0 % et ≤ 1 %.

3. Utilisation selon la revendication 1 ou 2, dans laquelle
R¹ représente un radical phényle et/ou alkyle en C₁-C₁₆, R¹ représentant de préférence un radical alkyle en C₁-C₁₂, R¹ représentant de manière davantage préférée un radical alkyle en C₁-C₈, R¹ représentant de manière particulièrement préférée un radical alkyle en C₁-C₄, R¹ représentant de manière préférée entre toutes un méthyle et/ou éthyle ; et/ou
R² représente H, méthyle, éthyle, propyle, isopropyle, butyle, tert.-butyle,
R³ représente - (CH₂)ₙ- avec n = 1 à 11.

4. Utilisation selon l'une quelconque des revendications 1 à 3 précédentes, dans laquelle a vaut 0 à 2, à condition que a + b soit inférieur ou égal à 3.

5. Utilisation selon l'une quelconque des revendications 1 à 4 précédentes, dans laquelle b vaut 0,1 à 3, à condition que a + b soit inférieur ou égal à 3.

6. Utilisation selon l'une quelconque des revendications 1 à 5 précédentes, dans laquelle le liant liquide réactif pour céramiques contient un solvant choisi dans le groupe comprenant les solvants organiques.

7. Utilisation selon l'une quelconque des revendications 1 à 6 précédentes, dans laquelle le liant liquide réactif pour céramiques contient en tant que solvant un alcool ou de l'acétone ou un mélange de ceux-ci.

8. Utilisation selon l'une quelconque des revendications 1 à 7 précédentes, dans laquelle le liant liquide réactif pour céramiques contient de l'eau et se présente de préférence sous la forme d'une émulsion aqueuse.

9. Utilisation selon l'une quelconque des revendications 1 à 8, dans laquelle les composés de siloxane organo-modifiés présentent un poids moléculaire de 500 à 20 000.

10. Utilisation selon l'une quelconque des revendications 1 à 9, dans laquelle au moins un additif est ajouté au liant pour céramiques, cet additif étant différent du composé de siloxane organo-modifié liquide à base de la formule (I), choisi dans le groupe comprenant un liant inorganique, un sel inorganique de l'acide sulfurique, un sel inorganique de l'acide chlorhydrique, un sel inorganique de l'acide phosphorique, le chlorure de magnésium, le sulfate de magnésium, le phosphate de mono-aluminium, un phosphate alcalin, un silicate alcalin, du verre soluble, un liant organique, un dérivé de cellulose, l'alcool polyvinylique, l'eau, des solvants organiques, des agents de démoulage, des stabilisateurs, des pigments organiques, des pigments inorganiques, des oxydes, des oxydes métalliques, des substances non oxydiques, de préférence du carbone, des poudres métalliques, des fibres métalliques, des fibres céramiques, des fibres de verre, des fibres naturelles, des fibres plastiques, des carbures, des nitrures, des siliciures, des polymères, de agents liquéfiants, des retardateurs de prise, des accélérateurs de prise, des adjuvants de compression, des agents lubrifiants, des agents de suspension, des agents antimousses, des agents de frittage, des catalyseurs et/ou des fibres de carbone, le liant pour céramiques comprenant de préférence des oxydes métalliques nanométriques, de préférence de l'oxyde d'aluminium nanométrique.

11. Utilisation de liants pour céramiques selon l'une quelconque des revendications 1 à 10 pour la fabrication d'articles céramiques de forme stable, notamment d'articles céramiques de forme stable réfractaires, à partir de poudres céramiques.

12. Utilisation de liants pour céramiques selon l'une quelconque des revendications précédentes pour la fabrication d'articles céramiques de forme stable comprimés et/ou traités thermiquement.

13. Utilisation de liants pour céramiques selon l'une quelconque des revendications précédentes pour la fabrication d'articles céramiques non façonnés, notamment d'articles céramiques non façonnés réfractaires.

14. Utilisation de liants pour céramiques selon l'une quelconque des revendications précédentes, dans laquelle les composés de siloxane organo-modifiés du liant pour céramiques sont ajoutés à la poudre céramique en une proportion en poids, par rapport au poids total de la poudre céramique, de 0,01 à 70 % en poids.

15. Matériau céramique, dans lequel le matériau céramique comprend un liant pour céramiques selon l'une quelconque des revendications 1 à 10 et une poudre céramique.

16. Matériau céramique selon la revendication 15, dans lequel le matériau céramique comprend des oxydes métalliques nanométriques, de préférence de l'oxyde d'aluminium nanométrique.

17. Matériau céramique selon la revendication 15 ou 16, dans lequel le matériau céramique présente de préférence une densité apparente de 500 g/l à 2 000 g/l.

18. Matériau céramique selon l'une quelconque des revendications 15 à 17, dans lequel le matériau céramique comprend des composants additionnels, choisis dans le groupe comprenant les liants organiques et/ou les liants inorganiques.

19. Matériau céramique selon l'une quelconque des revendications 15 à 18, dans lequel le matériau céramique est un matériau de moulage par injection, un matériau de damage, un matériau de béton, un pisé, un matériau de coulage, un matériau d'enduit ou un matériau de revêtement.

20. Procédé de fabrication d'articles céramiques de forme stable façonnés, notamment d'articles céramiques de forme stable réfractaires, **caractérisé en ce que** le procédé comprend les étapes suivantes :
a) le mélange d'un liant pour céramiques selon l'une quelconque des revendications 1 à 10 avec une poudre céramique pour former un matériau de moulage,
b) la solidification du matériau de moulage obtenu à l'étape a) par traitement sous pression et/ou traitement thermique, un article céramique de forme stable étant obtenu.

21. Procédé selon la revendication 20, selon lequel le liant liquide réactif pour céramiques est contenu dans le matériau de moulage en une proportion en poids, par rapport au poids total de la poudre céramique, de 0,01 à 70 % en poids.

22. Procédé selon la revendication 20 ou 21, dans lequel le mélange obtenu à l'étape a) est appliqué sur un support de forme stable.

23. P r o cédé selon l'une quelconque des revendications 20 à 22, dans lequel un additif, un composant additionnel et/ou un liant sont encore ajoutés à la poudre céramique, des oxydes métalliques nanométriques étant de préférence ajoutés à la poudre céramique, et de préférence de l'oxyde d'aluminium nanométrique.

24. P r o c é d é selon l'une quelconque des revendications 20 à 23, dans lequel le mélange obtenu à l'étape a) est solidifié par
- séchage du matériau céramique à une température de 50 °C à < 200 °C ; et/ou
- recuit à une température de ≥ 200 °C à < 1 000 °C ; et/ou
- calcination à une température de ≥ 1 000 °C.

25. Procédé de fabrication d'articles céramiques non façonnés, notamment d'articles céramiques réfractaires, **caractérisé en ce que** le procédé comprend les étapes suivantes :
a) le mélange d'un liant liquide réactif pour céramiques selon l'une quelconque des revendications 1 à 10 avec une poudre céramique ;
b) éventuellement l'ajout d'additifs, d'adjuvants et/ou de composants additionnels et/ou d'autres liants ;
c) la formation d'un matériau céramique, comprenant un matériau de béton, un matériau de coulage, un matériau de damage ou un pisé.

26. Procédé selon la revendication 25, selon lequel le liant liquide réactif pour céramiques est contenu dans le matériau céramique en une proportion en poids, par rapport au poids total de la poudre céramique, de 0,01 à 70 % en poids.
